# EUROPEAN PATENT SPECIFICATION

(11) **EP 0 572 257 B1**
(45) Date of publication and mention of the grant of the patent: **18.08.1999**
(21) Application number: 93304133.7
(22) Date of filing: 27.05.1993
(51) Int. Cl.: H04N 7/14

(54) **Image storing and reproducing system**
System zur Speicherung und Wiedergabe von Bildern
Système de mémorisation d'images et de reproduction d'images

(30) Priority: 28.05.1992 JP 13722992
(43) Date of publication of application: 01.12.1993
(73) Proprietor: SHARP KABUSHIKI KAISHA, Osaka-shi, Osaka-fu 545-0013 (JP)
(72) Inventor: Nakabayashi, Jiro, Urawa-shi, Saitama-ken (JP)
(74) Representative: Brown, Kenneth Richard

(56) References cited:
- EP-A- 0 303 322
- EP-A- 0 320 828
- DE-A- 4 006 172
- GB-A- 2 206 465
- GB-A- 2 223 911
- US-A- 5 018 186

## Description

### BACKGROUND OF THE INVENTION

### 1. Field of The Invention

The present invention relates to an image communication for an animated image, and more particularly it is related to an image storing and reproducing system.

### 2. Description of the Related Art

In recent days, a storage type service has been provided for storing speech data in a network center and reproducing the stored data from the network center at any time in addition to an interactive communication service such as an existing telephone and a facsimile. As a digital communication network such as an integrated service digital network (ISDN) has been arranged, image communication services such as videophone are likely to be used more frequently.

Under the foregoing condition, demand for an image storage service is likely to expand. In order to meet the demand, such image storage service is partially put into practice.

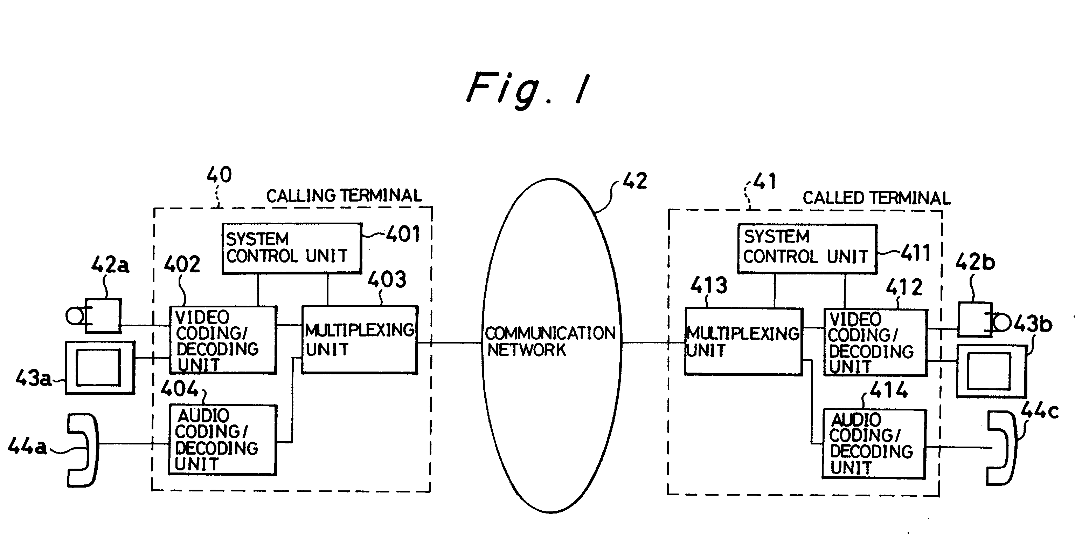

The inventors of the present invention know, for example from Television Congress Journal, Vol.42, No.11, published 1988, a conventional videophone system shown in Fig. 1.

The videophone system shown in Fig. 1 includes a calling terminal 40, a called terminal 41, a communication network 42 such as ISDN, cameras 42a, 42b for inputting an image, monitors 43a, 43b for outputting an image, and handsets 44a, 44b for inputting and outputting speech data.

The calling terminal 40 provides a system control unit 401, a video coding/decoding unit 402, a multiplexed data sending/receiving unit (multiplexing unit) 403, and an audio coding/decoding unit 404.

The called terminal 41 provides a system control 411, a video coding/decoding unit 412, a multiplexed data sending/receiving unit (multiplexing unit) 413, and a audio coding/decoding unit 414.

Next, the operation of the videophone system shown in Fig. 1 will be described.

An image input from the camera 42a of the terminal 40 is coded by using an inter-frame prediction coding technique to be executed in the video coding/decoding unit 402. The coding results in reducing the amount of data information.

A speech signal input from the handset 44a is coded in the audio coding/decoding unit 404.

The video coded data and the audio coded data are multiplexed with an video control signal given by the system control unit 401 in the multiplexing unit 403 and then the multiplexed signal is sent to the communication network 42.

The multiplexed data sent out to the communication network 42 is separated into an video control signal, the video coded data and the audio coded data in the multiplexing unit 413 provided in the called terminal 41.

The separated video control signal is sent to the system control unit 411 provided in the called terminal 41. The video coded data is sent to the video coding/decoding unit 412 provided in the called terminal 41. The audio coded data is sent to the audio coding/decoding unit 414.

The video coding/decoding unit 412 serves to decode the video coded data subject to the inter-frame prediction and then output the decoded data to the monitor 43b.

The audio coding/decoding unit 414 serves to decode the audio coded data and then output the decoded data to the handset 44c. The video control signal is processed in the system control unit 411.

The aforementioned operation is executed interactively between both of the terminals in order to operate the conventional videophone system.

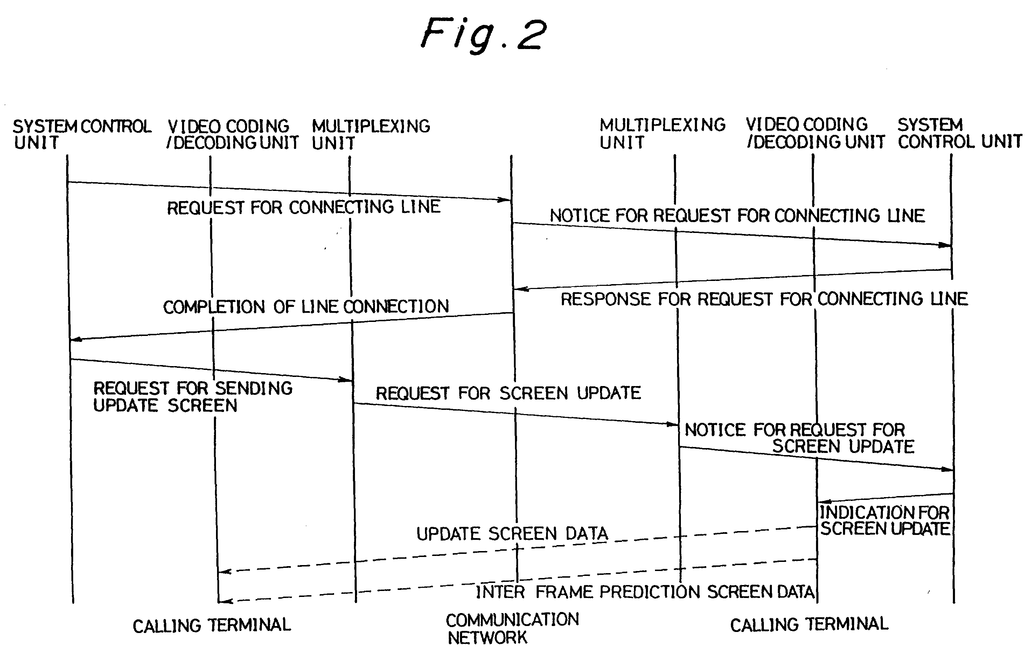

Fig. 2 shows an example of an image transmitting system used in the conventional videophone shown in Fig. 1.

As shown in Fig. 2, the calling terminal 40 gives a call for establishing a line between the calling terminal 40 and the called terminal 41. After making sure of the line connection, the system control unit 401 of the calling terminal 40 sends out a sending request of an update screen served as a frame reference screen to the called terminal 41.

In response to the request signal, the system control unit 411 of the called terminal 41 issues an indication for sending the update screen to the video coding/decoding unit 412. The video coding/decoding unit 412 sends out the update screen to the sending terminal 40 according to the indication. Following this procedure, the called terminal 41 sends back to the calling terminal 40 the update screen served as a reference screen for inter-frame prediction coding as soon as possible after establishing the line so that the calling terminal 40 may display an excellent image of the person called.

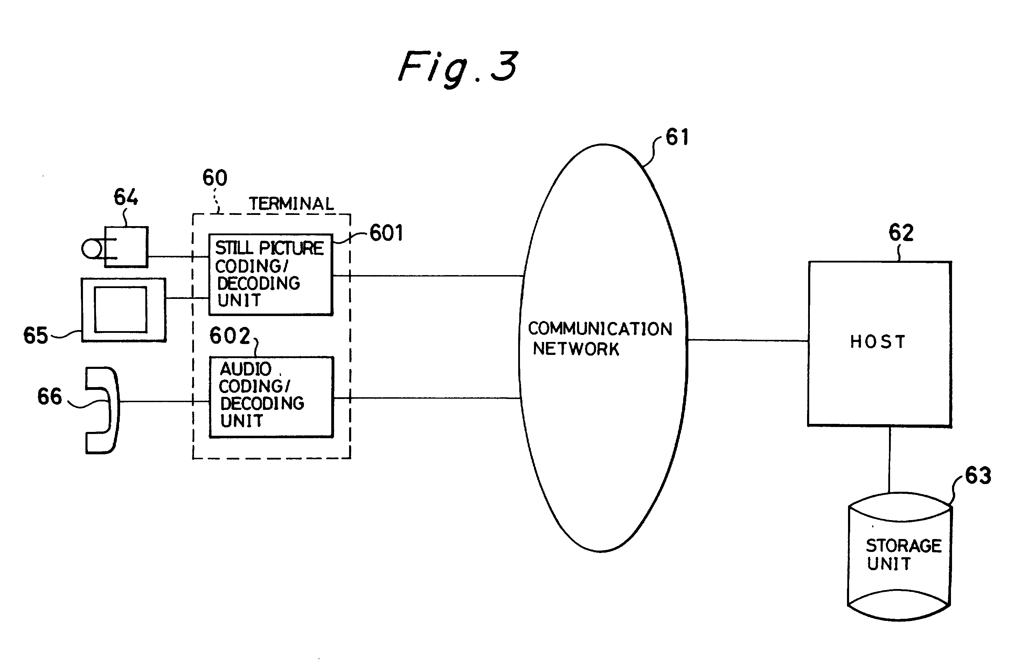

Fig. 3 shows one configuration of the conventional image storage service system using a still picture which is, for example, known from Television Congress Journal, Vol.39, No.5, published 1985.

The image storage service system shown in Fig. 3 includes a communication terminal 60, a communication network 61 such as an ISDN, a communication host 62, a storage unit 63 for storing an image, a camera 64 through which an image is input, a monitor 65 for outputting an image, and a handset 66 for inputting and outputting speech.

The communication terminal 60 provides a still picture coding/decoding unit 601 for coding and decoding a still picture and an audio image coding/decoding unit 602 for coding and decoding speech.

Next, the operation of the image storage service system shown in Fig. 3 will be described.

First, the host 62 and the terminal 60 are connected through the ISDN network serving as the communication network 61 so that the line is connected in response to a request issued from the host 62 or the terminal 60. After the line is connected, the host 62 operates to display a guide screen formed by a still picture on the monitor 65 of the terminal 60. On the guide screen, a user on the side of the terminal 60 may select a menu according to the guide screen.

The menu is for storing or reproducing an image. In any case, a still picture is treated at one frame unit with its relevant speech. The still picture to be stored is input through the camera 64. The speech to be stored is input from the handset 66. The input picture and speech are respectively coded in the still picture coding/decoding unit 601 and the audio coding/decoding unit 602. The coded data is sent to the host 62 through the communication network 61. The host 62 operates to store the data of the image and speech sent from the terminal 60 in the storage unit 63.

In order to realize an image storage service using an animated image, the image communication format used in the foregoing conventional videophone needs to detect the update screen served as a reference for inter-frame prediction coding and reproduce it, because the inter-frame prediction is done for compressing and coding the image. The actual service needs to display some still pictures such as the guide screen and the menu screen. However, the communication system used in the foregoing conventional videophone operates to perform communication and reproduction of an image as one terminal requests another terminal to send an image. Hence, the conventional communication system is not sensitive to the content of the data and is incapable of detecting it. In fact, it has difficulty in detecting-the data about the update screen and is not capable of freezing the image and displaying the still picture. As such, the communication unit used in the foregoing conventional videophone is unable to reproduce an inter-frame prediction coded image or display a still picture if it is used without any modification.

The foregoing conventional communication system, therefore, makes it possible to store and reproduce an image without detecting the update screen data by increasing the number of transmission frames of a still picture not subject to the inter-frame prediction so that the resulting still picture may look like an animated image. In this case, however, non-use of the inter-frame prediction coding technique results in making the amount of coded data ten or more times larger than that given if the technique is used. Hence, to transmit the data needed to obtain a sufficient image quality as an animated image, disadvantageously, the transmission cost goes up.

As another problem, the communication line used in the conventional communication system does not provide sufficient transmission capacity.

### SUMMARY OF THE INVENTION

According to the present invention, there is provided an image storing and reproducing system as defined in claim 1.

Embodiments of the invention are advantageously capable of transmitting data needed for obtaining a sufficient image quality as an animated image at low cost and transmitting necessary data by using the conventional communication line as keeping the necessary amount of transmission capacity.

This advantage can be achieved by an image storing and reproducing system which is adapted to transmit data required for obtaining an animated image with sufficient quality at low cost and to transmit necessary data by using a conventional communication line so as to keep a necessary amount of transmission capacity includes a first converting unit for either coding or decoding an input image, a first sending/receiving unit connected to the first converting unit for sending an image coded by the first converting unit, a first control unit connected to both the first converting unit and the first sending/receiving unit for controlling the first converting unit and the first sending/receiving unit, a second sending/receiving unit connected to the first sending/receiving unit for receiving an image sent from the first sending/receiving unit, a storage unit connected to the second sending/receiving unit for storing an image received by the second sending/receiving unit, and a second control unit connected to the second sending/receiving unit for controlling the second sending/receiving unit so that the second sending/receiving unit reads an image stored in the storage unit and send the read image to the first sending/receiving unit.

The first control unit is adapted to add a screen freeze release signal to the image as control information and to control the first sending/receiving unit so as to transmit the image at a time when coding the image.

The second control unit is adapted to control the storage unit so as to store the image, and the first sending/receiving unit is adapted to transmit an update screen, and the storage unit is adapted to store the transmitted update screen according to the second control unit.

The second control unit is further adapted to release a freeze of a previous screen based on the screen freeze release signal for decoding the update screen according to the first converting unit at a time when reading and decoding the image.

The first control unit is adapted to control the first sending/receiving unit so as to transmit an update screen, and the second control unit is adapted to control the storage unit so as to store the update screen.

The first control unit is further adapted to add an image condition signal as control information to the image and to transmit the image through the first sending/receiving unit at a time when coding the image.

The second control unit is adapted to control the storage unit so as to store the image, and the first converting unit is further adapted to decode the update screen when reading and decoding the image, and the second control unit is further adapted to release the freeze of the screen based on the image condition signal and to freeze the image again.

The first control unit is adapted to add an image condition signal as control information to the image and to control the first sending/receiving unit so as to transmit the image when coding the image.

The second control unit is adapted to control the storage unit so as to store the image, and the first sending/receiving unit is adapted to transmit an update screen, and the second control unit is adapted to control the storage unit so as to store the image.

The second control unit is adapted to release the freeze of the screen based on the image condition signal at a time when reading and decoding the image, the first converting unit is adapted to decode the update screen, and the second control unit is further adapted to freeze the screen again.

In operation of the image storing and reproducing system in an embodiment of the invention, the first converting unit operates to code or decode the input image. The first sending/receiving unit operates to transmit the image coded by the first converting unit. The first control unit controls the first converting unit and the first sending/receiving unit. The second sending/receiving unit serves to receive the image sent from the first sending/receiving unit. The storage unit serves to store the image received in the second sending/receiving unit. The second control unit serves to read out the image stored in the storage unit and send the read image to the second sending/receiving unit.

As another functional arrangement, when coding the image, the first control unit serves to add a screen freeze releasing signal as the control data of an image in a manner to operate the first sending/receiving unit to transmit the image to which the control data is added. Then, the second control unit puts the image data into the storage unit. When reading and decoding the image, the second control unit serves to release the freeze of the previous screen based on the image freeze releasing signal and operates the converting unit to decode the update screen.

As another functional arrangement, when coding the image, the first control unit serves to transmit the update screen through the effect of the first sending/receiving unit. Then, the second control unit serves to store the update screen in the storage unit. The second control unit further serves to add an image condition signal as the control information of the image. The resulting image is transmitted through the effect of the first sending/receiving unit. The second control unit operates the storage unit to store the image. When reading and decoding the image, the converting unit serves to decode the update screen. The second control unit serves to release the freeze of the previous screen based on the image conditional signal and again freeze the screen.

As another functional arrangement, when coding the image, the first control unit serves to add an image condition signal as control information of the image. The condition signal added image is sent by the first sending/receiving unit. The second control unit operates the storage unit to store the sent image data therein. Then, the update screen is transmitted by the first sending/receiving unit. Then, the second control unit operates the storage unit to store the update screen. When reading and decoding the image, the second control unit serves to release the freeze of the previous screen based on the image condition signal and the converting unit serves to decode the update screen. Then, the screen is frozen again through the effect of the second control unit.

The image storing and reproducing system according to the invention includes first converting unit for coding or decoding an input image, first sending/receiving unit for sending an image coded by the first converting unit, first control unit for controlling the first converting unit and the first sending/receiving unit, second sending/receiving unit for receiving an image sent from the first sending/receiving unit, storage unit for storing an image received by the second sending/receiving unit, and second control unit for controlling the second sending/receiving unit to read an image stored in the storage unit and send the read image. The system enables easy storage and reproduction of an image with an inter-frame prediction signal for a conventionally used videophone. If the image storing and reproducing system is arranged to use an animated image, when reproducing and displaying the image, the system can achieve the same vividness as the conventional system though the communication line keeps the same transmission capacity.

In the image storing and reproducing system according to the invention, a still picture can be reproduced. In this case, by decoding a still picture to some extent in the decoding unit when reproducing it and displaying the image, the system can achieve the same vividness as the conventional system when reproducing and displaying the image.

In the image storing and reproducing system according to the invention, it needs the same transmission capacity of the communication line as the conventional system. It enables to display a vivid guide screen and menu screen in addition to the animated image, thereby enhancing the quality of the service.

### BRIEF DESCRIPTION OF THE DRAWINGS

Fig. 1 is a block diagram showing one arrangement of a conventional videophone system;
Fig. 2 is an explanatory view showing an example of a method for transmitting an image used in the conventional videophone shown in Fig. 1;
Fig. 3 is a block diagram showing one arrangement of the conventional image storage service system using a still picture;
Fig. 4 is a block diagram showing an arrangement of an image storing and reproducing system according to an embodiment of the present invention;
Fig. 5 is an explanatory view showing a configuration of a stored image according to a first embodiment in the image storing and reproducing system shown in Fig. 4;
Fig. 6 is an explanatory view showing an example of a method for storing the stored image shown in Fig. 5;
Fig. 7 is an explanatory view showing an example of a method for reproducing a stored image shown in Fig. 5;
Fig. 8 is an explanatory view showing a configuration of a stored image according to a second embodiment in the image storing and reproducing system shown in Fig. 4;
Fig. 9 is an explanatory view showing an example of a method for storing an image shown in Fig. 8;
Fig. 10 is an explanatory view showing an example of a method for reproducing a stored image shown in Fig. 8;
Fig. 11 is an explanatory view showing a stored image according to a third embodiment in the image storing and reproducing system in Fig. 4;
Fig. 12 is an explanatory view showing an example of a method for storing the stored image shown in Fig. 11; and
Fig. 13 is an explanatory view showing an example of a method for reproducing the stored image shown in Fig. 11.

### DESCRIPTION OF THE PREFERRED EMBODIMENTS

Referring to the accompanying drawings, a preferred embodiment of an image storing and reproducing system according to the present invention will be described in detail.

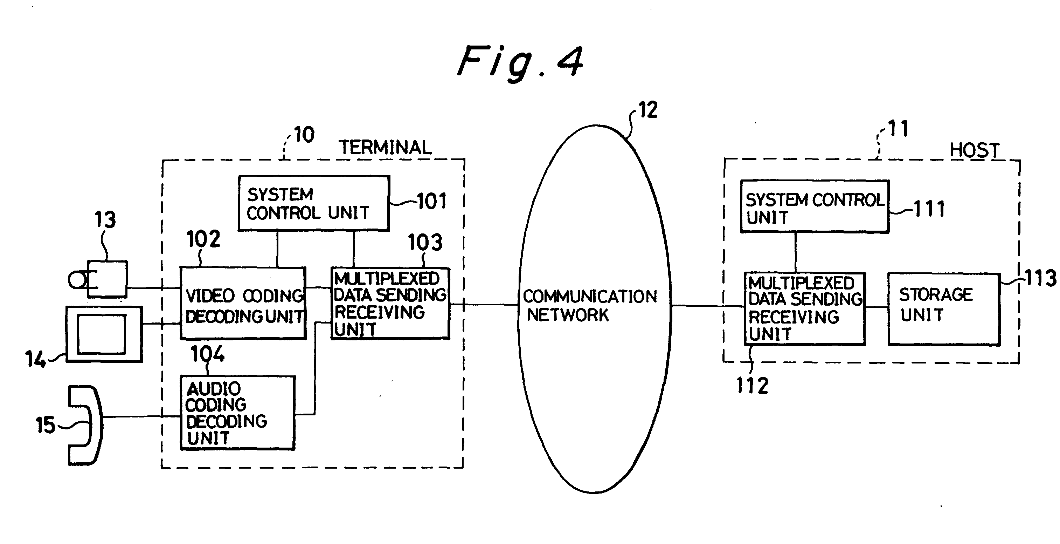

Fig. 4 shows a configuration of an image storing and reproducing system according to an embodiment of the present invention.

The image storing and reproducing system shown in Fig. 4 includes a communication terminal 10, a communication host 11, a communication network 12 such as an integrated service digital network (ISDN) connected to the communication terminal 10 and the communication host 11, a camera 13 connected to the communication terminal 10 for inputting an image therefrom, a monitor 14 connected to the communication terminal 10 for outputting an image, and a handset 15 connected to the communication terminal 10 for inputting and outputting a voice in a telephone conversation.

The communication terminal 10 provides a system control unit 101 served as first control means, a video coding/decoding unit 102 served as converting means, a multiplexed data sending/receiving unit 103 served as first sending/receiving means, and a speech coding/decoding unit 104.

The communication host 11 provides a system control unit 111 serving as second control means, a multiplexed data sending/receiving unit 112, and a data storage unit 113 served as storing means.

Next, the operation of the image storing and reproducing system shown in Fig. 4 will be described.

An animated image input from the camera 13 on the side of the terminal 10 is coded by an inter-frame prediction technique in the video coding unit 102. At this time, according to an indication given from the system control unit 101, a header information is added as video coding information. The coded speech data with the header information is input from the handset 15. The speech data coded by the audio coding unit 104 and the control information are multiplexed in the multiplexed data sending unit 103 and is transmitted to the host 11 through the communication network 12.

On the host 11 side, the multiplexed data sent from the terminal 10 through the communication network 12 is received by the multiplexed data sending/receiving unit 112. The multiplexed video and audio data formed by the multiplexed data sending/receiving unit 112 is transferred to the storage unit 113 in a proper form of a file and then is stored.

The data stored in the storage unit 113 is read out of the storage unit 113 according to an indication given from the user or the host 11 and then is sent to the multiplexed data sending/receiving unit 112 of the host 11. The multiplexed data sending/receiving unit 112 of the host 11 operates to rewrite the control information stored at a time of storage into new control information according to an indication given by the system control unit 111 and to transmit the new control information to the terminal 10 through the communication network 12.

On the terminal 10 side, the multiplexed data together with the written control information sent from the host 11 is received in the multiplexed data sending/receiving unit 103.

The multiplexed data sending/receiving unit 103 on the terminal 10 serves to separate the data into the control information, the video data, and the audio data, and then send the control information to the system control unit 101.

The coded video data separated in the multiplexed data sending/receiving unit 103 is sent to the video coding/decoding unit 102. According to an indication given from the system control unit 101, the video coding/decoding unit 102 serves to decode and reproduce the animated image.

The reproduced image is displayed on the monitor 14.

The speech data separated in the multiplexed data sending/receiving unit 103 is decoded and reproduced in the audio coding/decoding unit 104 and then is output from the handset 15.

In the image storing and reproducing system shown in Fig. 4, the communication is constantly executed interactively on the line even during the storing and reproducing operation. The control information may be communicable regardless of the video data being given or not.

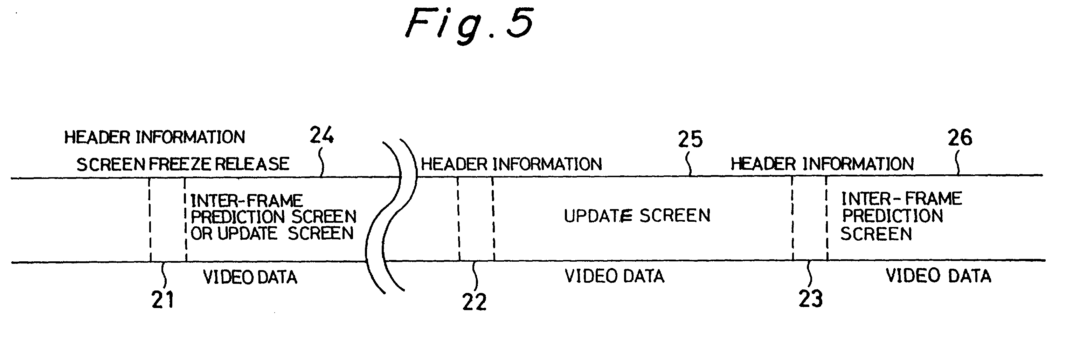

Fig. 5 shows an arrangement of the first embodiment of the image stored by the image storing and reproducing system shown in Fig. 4.

The stored video data shown in Fig. 5 is arranged to have the header information 21 containing screen freeze release information, in particular, the header information 22, 23 with no indication, video data 24 of an inter-frame prediction screen or an update screen, video data 25 of the update screen, and video data 26 of the inter-frame prediction screen.

As shown in Fig. 5, the screen freeze release information is inserted into the stored video data as the header information of the video. The screen freeze release information 21 is inserted, because a newly sent image is not displayed if the previous image is frozen in a case of reproducing an image. It is not necessary to insert the later header information 22, 23 of the video. As the video data succeeding to the screen freeze release signal, the video data 24 of the inter-frame prediction screen or the update screen is sent. The video data succeeding to the video data 24 is the video data 25 of the update screen. The video data succeeding to the video data 25 of the update screen is the video data 26 of the inter-frame prediction screen.

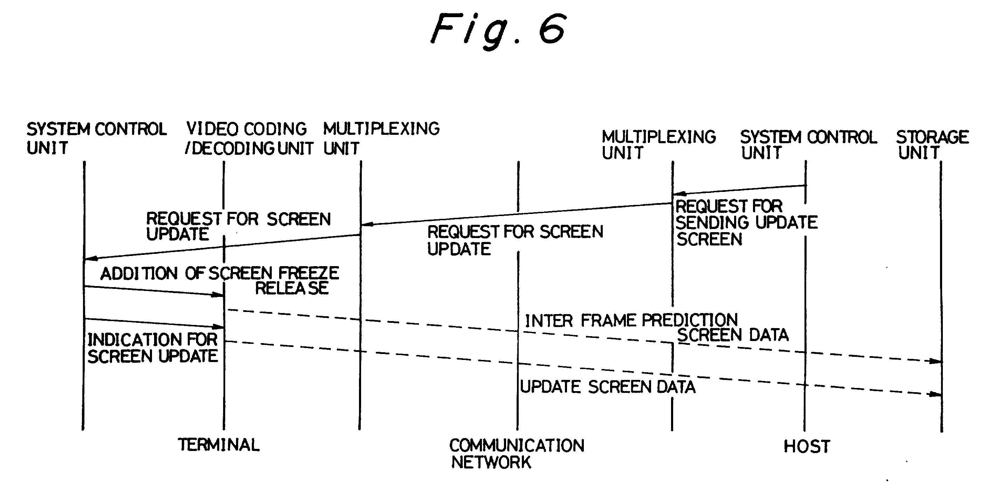

Fig. 6 is an explanatory view showing an example of a storing method of a stored video data shown in Fig. 5.

After connecting the line between the terminal 10 and the host 11, in the communicable state, the host 11 issues a transfer request and a screen update request of a stored screen as control information to the terminal 10.

As shown in Fig. 6, the system control unit 111 of the host 11 issues a request for sending an update screen to the multiplexing unit 112.

The multiplexing unit 112 operates to send out the request of update screen as control information to the multiplexing unit 103 of the terminal 10 according to this indication.

The multiplexing unit 103 of the terminal 10 notifies this indication to the system control unit 101. The system control unit 101 issues an indication of adding the screen freeze release information to the video coding/decoding unit 102. In response to the indication, the video coding/decoding unit 102 sends out the inter-frame prediction screen with setting the header information in the screen freeze release mode. In succession, the system control unit 101 issues an indication for updating the screen to the video coding/decoding unit 102. In response to the indication, the video coding/decoding unit 102 serves to send out the update screen.

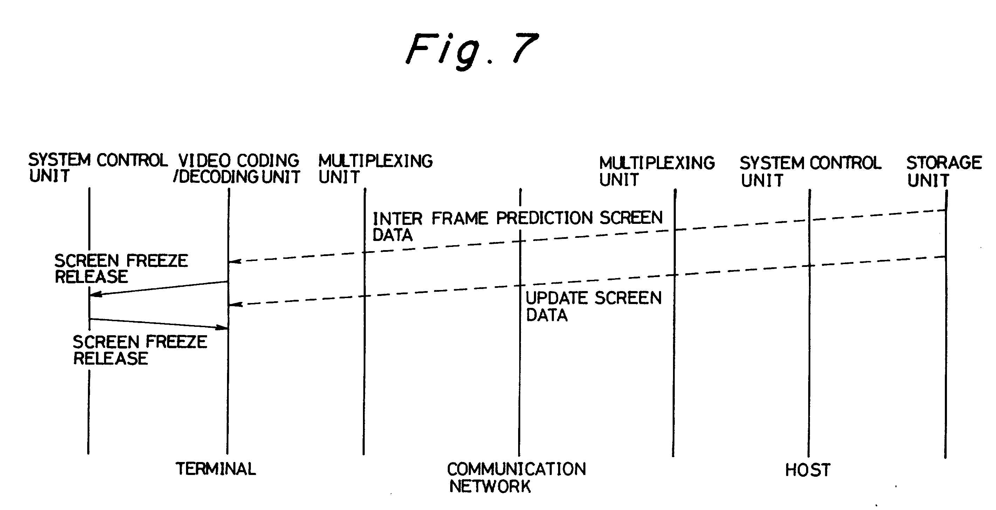

Fig. 7 is an explanatory view showing an example of a method for reproducing the store video data shown in Fig. 5.

After connecting the line between the terminal 10 and the host 11, in the communicable state, the host 11 sends out to the terminal 10 the video data of the inter-frame prediction screen and the update screen stored in the host 11. On the side of the terminal 10, the previous screen is released out of the freeze according to the content of the header information. The video data of the inter-frame prediction screen sent from the host 11 is reproduced and the update screen sent in succession is reproduced.

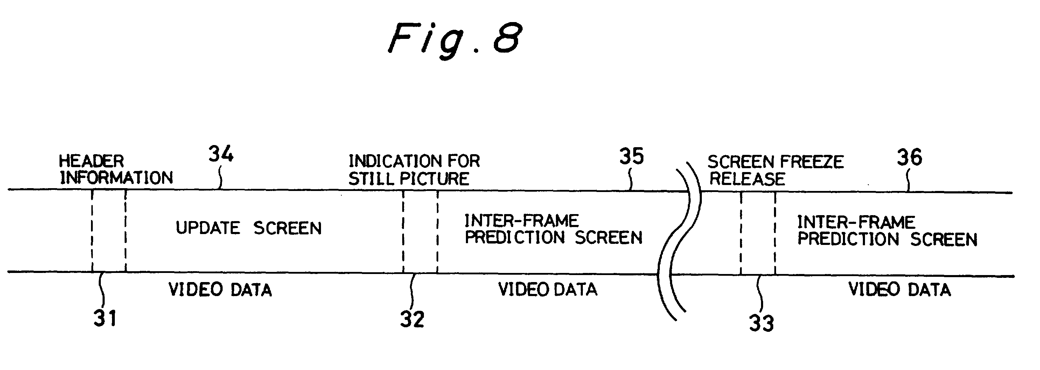

Fig. 8 shows an arrangement of video data stored by the image storing and reproducing system shown in Fig. 4 according to a second embodiment of the present invention.

The stored video data shown in Fig. 8 is arranged to have header information 31 with no indication, header information 32 containing still picture indicating information, header information 33 containing screen freeze release information, video data 34 of an update screen, and video data 35, 36. As shown in Fig. 8, it is necessary to insert nothing into the header information 31 and 32 of the video.

The video data following the header information 31 is video data 34 of the update screen. The video data following the video data 34 of the update screen is the video data 35 of an inter-frame prediction screen.

The screen freeze release information 33 is inserted as header information of a video into the stored video data. The screen freeze release information is inserted, because the newly sent image is not displayed if the previous image is frozen in a case of reproducing an image. As the video data following the screen freeze releasing signal, the video data 36 of the inter-frame prediction screen is sent.

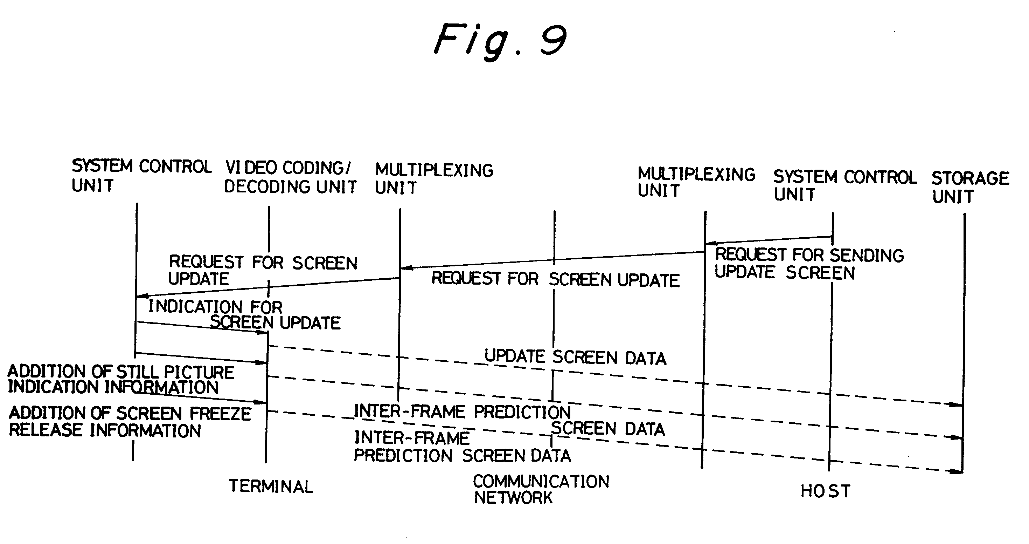

Fig. 9 is an explanatory view showing an example of a storing method of the stored video data shown in Fig. 8.

After-connecting the line between the terminal 10 and the host 11, in the communicable state, the host 11 issues to the terminal 10 a request for transferring a still picture storing screen and a request for updating a screen as control information.

As shown in Fig. 9, at first, the system control unit 111 of the host 11 issues a request for sending an update screen to the multiplexed data sending/receiving unit (multiplexing unit) 112.

The multiplexing unit 103 of the terminal 10 notifies this indication to the system control unit 101. The system control unit 101 issues an indication for updating the screen to the video coding/decoding unit 102.

The video coding/decoding unit 102 sends out the data about an updated screen according to this indication.

In succession, the system control unit 101 issues an indication for adding the screen freeze release information after indicating the addition of still picture indication information.

In response to the indication, the video coding/decoding unit 102 operates to set the header information to be the still picture indication, and then set to be the screen freeze releasing indication, and send out the video data about the inter-frame prediction screen.

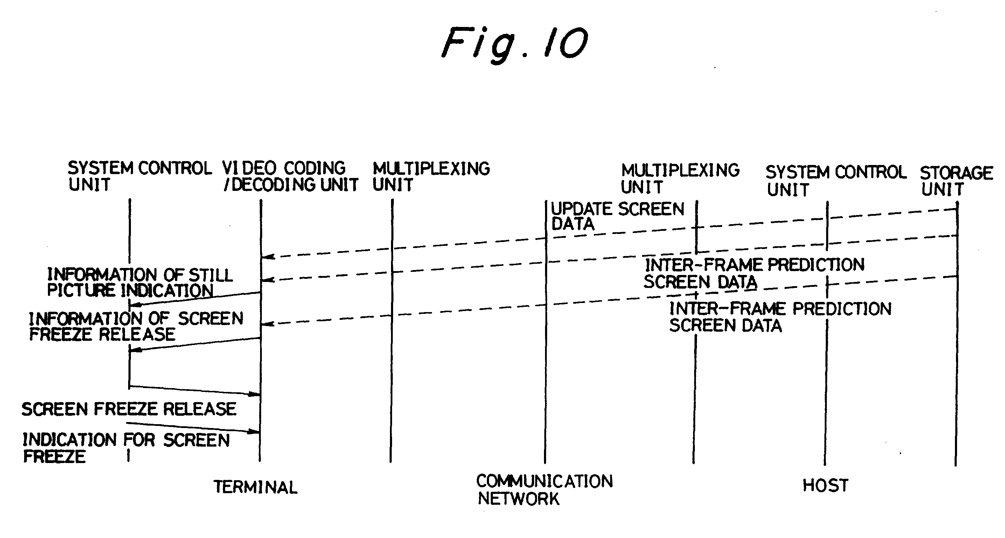

Fig. 10 is an explanatory view showing an example of a method for reproducing the stored video data shown in Fig. 8.

After connecting the line between the terminal 10 and the host 11, in the communicable state, the host 11 sends out the stored video data to the terminal. On the terminal 10 side, the stored video data is directly reproduced.

As shown in Fig. 10, at first, the reference screen is received from the video data about the update screen. In succession, the still picture indication information and the screen freeze release information are sent as the content of the header information. In the meantime, the video data of the inter-frame prediction screen is sent out. The video coding/decoding unit 102 updates the screen but does not change the display.

In succession, for displaying the still picture according to the content of the header information, the system control unit 101 operates to release the freeze of the displayed screen, to issue an indication for freezing the screen immediately, and to display the frozen still picture on the screen.

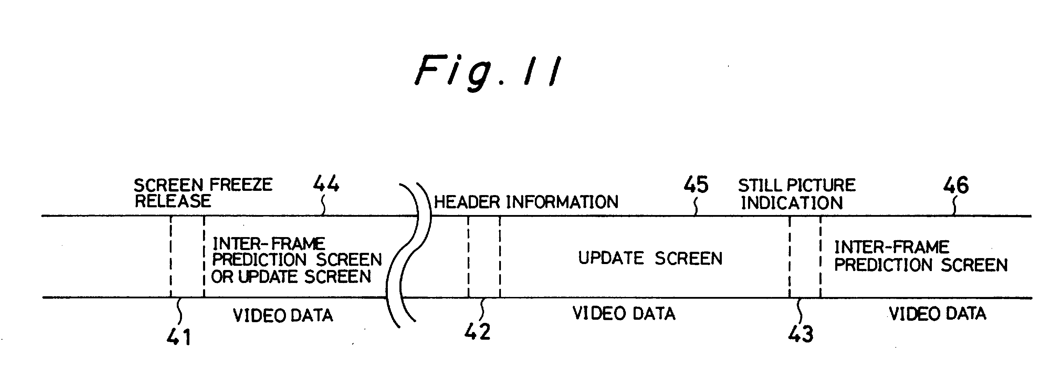

Fig. 11 shows an arrangement of a stored video data in the image storing and reproducing system shown in Fig. 4 according to a third embodiment of the invention.

The stored video data shown in Fig. 11 is arranged to have header information 41 containing screen freeze release information, header information 42; header information 43 containing still picture indication information, video data about an inter-frame prediction screen or an update screen, video data 45 about an update screen, and video data 46 about an inter-frame prediction screen.

As shown in Fig. 11, the screen freeze release information 41 is inserted as header information to the stored video data. This is because a newly sent image is not displayed if the previous image is frozen in a case of reproducing an image. Following the screen freeze release signal, the video data 45 of an update screen is sent as video data. At this time, no indication for the header information is necessary. As the header information following the update screen 45, the still picture indicating information 43 is inserted. As the video data following it, the video data 46 of the inter-frame prediction screen is sent out.

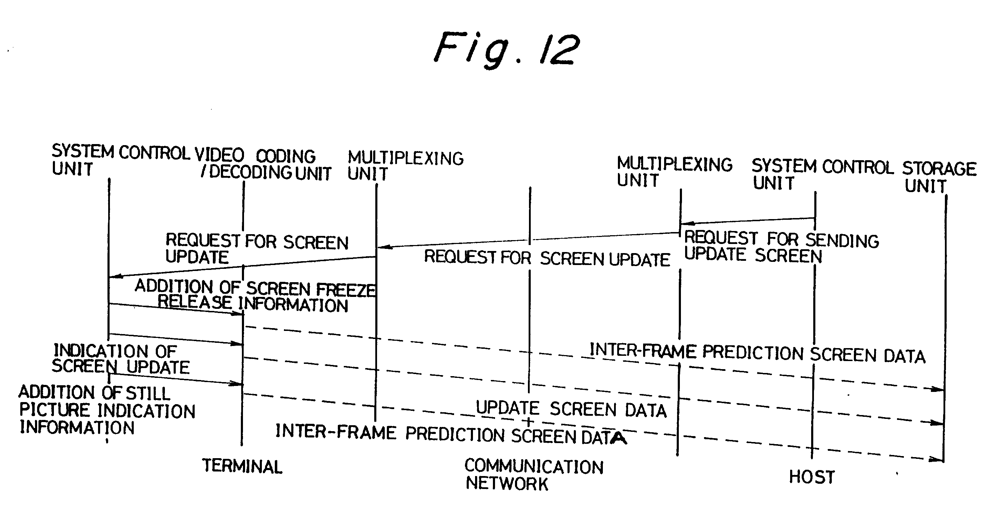

Fig. 12 is an explanatory view showing an example of a method for storing a stored video data shown in Fig. 11.

After connecting a line between the terminal 10 and the host 11, in a communicable state, the host 11 issues to the terminal 10 a request for transferring a still picture storage screen and a request for updating a screen as control information.

At first, the system control unit 111 of the host 11 issues a request for sending an update screen to the multiplexing unit 112.

The multiplexing unit 112 sends out the request for updating a screen as control information to the multiplexing unit 103 of the terminal 10 according to this indication.

The multiplexing unit 103 of the terminal 10 notifies this indication to the system control unit 101. The system control unit 101 gives an indication about addition of screen freeze release information to the video coding/decoding unit 102 and then gives an indication for updating a screen.

In response to the indication, the video coding/decoding unit 102 sets the header information to the picture freeze release information. Then, the video coding/decoding unit 102 sends out the update screen, the video data of an inter-frame prediction screen, and an update screen. And then, the video coding/decoding unit 102 issues an indication about addition of still picture indicating information as condition information of the screen.

In response to the indication, the video coding/decoding unit 102 sets the header information to the still picture indication and sends out the inter-frame prediction screen.

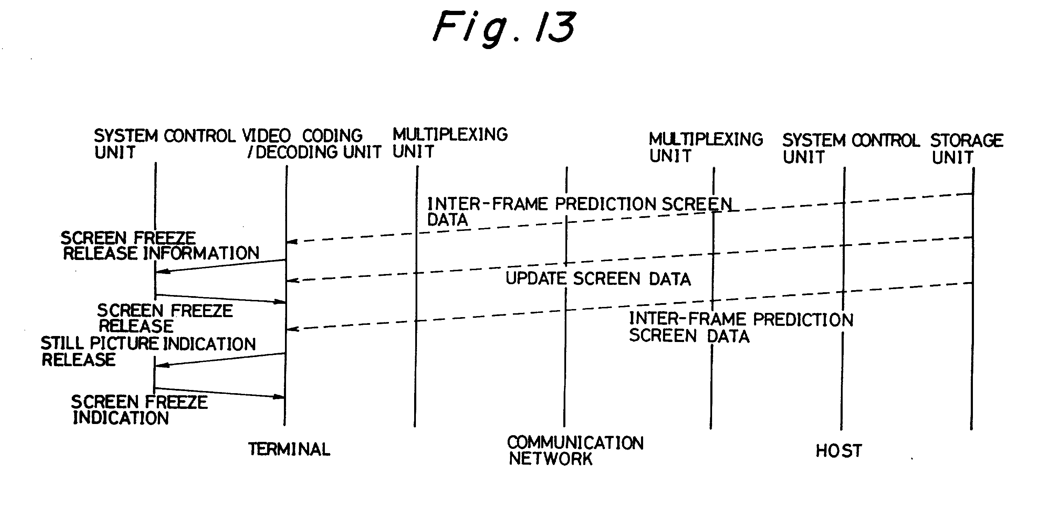

Fig. 13 is an explanatory view showing an example of a method for reproducing a stored video data shown in Fig. 11.

In Fig. 13, after connecting the line between the terminal 10 and the host 11, in a communicable state, the host 11 sends out the stored video data to the terminal 10. On the terminal 10, the stored video is directly reproduced.

At first, the freeze of the previous screen is released according to the content of the header information. Then, since the update screen is sent, it is reproduced. After reproducing the update screen, the inter-frame prediction screen is sent to the terminal 10. Then, it is reproduced. Since the header information is an indication for a still picture, the system control unit 101 operates to send out an indication for freezing a screen to the video coding/decoding unit 102 according to the content.

## Claims

1. An image storing and reproducing system comprising
a plurality of communication terminals (10) and a communication host (11) coupled with said communication terminals through a communication network,
said communication terminals (10) each including:
an image coding/decoding unit (102) for coding or decoding image data;
a first sending/receiving unit (103) coupled with said image coding/decoding unit for sending or receiving said coded image data; and
a first control unit (101) coupled with both of said image coding/decoding unit and said first sending/ receiving unit for controlling both said image coding/ decoding unit and said first sending/receiving unit;
said communication host (11) including:
a second sending/receiving unit (112) coupled with said first sending/receiving unit through said communication network for sending/receiving upon request by at least one of said communication terminals said coded image data; and
a storage unit (113) coupled with said second sending/receiving unit for storing said image data received in said second sending/receiving unit;
characterized in that each first control unit (101) is operable to add image control information comprising screen freeze release information or still picture indicating information to said coded image data so as to change the transmission of said image data between an animated image mode and a still picture mode; in that said storage unit (113) is arranged to store said image data with said image control information; and in that the communication host includes a second control unit (111) coupled with said second sending/ receiving unit for controlling said second sending/ receiving unit so as to change said transmission of said image data between said animated image mode or said still picture mode by reading said image control information with said image data.

2. An image storing and reproducing system according to claim 1, characterized in that said image coding/ decoding unit (102) is adapted to code said image data by using an inter-frame prediction coding technique.

3. An image storing and reproducing system according to claim 1 or 2, characterized in that said communication terminals (10) each further include a speech coding/decoding unit (104) for coding/decoding speech data, and each of said first sending/receiving unit (103) and said second sending/receiving unit (112) is adapted to multiplex said coded image data and said coded speech data respectively.

4. An image storing and reproducing system as claimed in any preceding claim, characterised in that said first control unit (101) is arranged to add said image control information as header information of said coded image data.

5. An image storing and reproducing system as claimed in claim 4, characterized in that said header information is selected from a group comprising still picture indicating information, screen freeze release information or no indication.

## Patentansprüche

1. System zur Speicherung und Wiedergabe von Bildern, mit einer Anzahl von Kommunikationsendstellen (10) und einem mit diesen über ein Kommunikationsnetzwerk verbundenen Kommunikationshost (11);
- wobei die Kommunikationsendstelle (10) jeweils Folgendes beinhaltet:
-- eine Bild-Codier/Decodier-Einheit (102) zum Codieren oder Decodieren von Bilddaten;
-- eine erste Sende/Empfangs-Einheit (103), die mit der Bild-Codier/Decodier-Einheit verbunden ist, um die codierten Bilddaten zu senden oder zu empfangen; und
-- eine erste Steuereinheit (101), die sowohl mit der Bild-Codier/Decodier-Einheit als auch der ersten Sende/Empfangs-Einheit verbunden ist, um sowohl die Bild-Codier/Decodier-Einheit als auch die erste Sende/Empfangs-Einheit zu steuern;
- wobei der Kommunikationshost (11) Folgendes beinhaltet:
-- eine zweite Sende/Empfangs-Einheit (112), die über das Kommunikationsnetzwerk mit der ersten Sende/Empfangs-Einheit verbunden ist, um bei Anforderung durch mindestens eine der genannten Kommunikationsendstellen die codierten Bilddaten zu senden/zu empfangen; und
-- eine Speichereinheit (113), die mit der zweiten Sende/ Empfangs-Einheit verbunden ist, um die in dieser zweiten Sende/Empfangs-Einheit empfangenen Bilddaten zu speichern;
**dadurch gekennzeichnet,** dass jede erste Steuereinheit (101) so betreibbar ist, dass sie Bildsteuerinformation, die Bildschirmeinfrier-Freigabeinformation oder Stehbild-Hinweisinformation umfasst, zu den codierten Bilddaten hinzufügt, um die Übertragung der Bilddaten zwischen einem Animationsbildmodus und einem Stehbildmodus umzuschalten; dass die Speichereinheit (113) so ausgebildet ist, dass sie die Bilddaten mit der Bildsteuerinformation speichert; und dass der Kommunikationshost eine zweite Steuereinheit (111) beinhaltet, die mit der zweiten Sende/Empfangs-Einheit verbunden ist, um dieselbe so zu steuern, dass die Übertragung der Bilddaten zwischen dem Animationsbildmodus und dem Stehbildmodus dadurch umgeschaltet wird, dass die Bildsteuerinformation mit den Bilddaten gelesen wird.

2. System zur Speicherung und Wiedergabe von Bildern nach Anspruch 1, **dadurch gekennzeichnet,** dass die Bild-Codier/Decodier-Einheit (102) so ausgebildet ist, dass sie die Bilddaten unter Verwendung einer Zwischenvollbild-Vorhersagecodiertechnik codiert.

3. System zur Speicherung und Wiedergabe von Bildern nach Anspruch 1 oder 2, **dadurch gekennzeichnet,** dass die Kommunikationsendstellen (10) ferner jeweils eine Sprach-Codier/Decodier-Einheit (104) zum Codieren/Decodieren von Sprachdaten aufweisen und sowohl die erste Sende/Empfangs-Einheit (103) als auch die zweite Sende/Empfangs-Einheit (112) so ausgebildet sind, dass sie die codierten Bilddaten bzw. die codierten Sprachdaten multiplexen.

4. System zur Speicherung und Wiedergabe von Bildern nach einem der vorstehenden Ansprüche, **dadurch gekennzeichnet,** dass die erste Steuereinheit (101) so ausgebildet ist, dass sie die Bildsteuerinformation als Kopfinformation zu den codierten Bilddaten hinzufügt.

5. System zur Speicherung und Wiedergabe von Bildern nach Anspruch 4, **dadurch gekennzeichnet,** dass die Kopfinformation aus einer Gruppe ausgewählt wird, die Stehbild-Hinweisinformation, Bildschirmeinfrier-Freigabeinformation oder keinen Hinweis enthält.

## Revendications

1. Système de stockage et de reproduction d'images comprenant une multiplicité de terminaux de communication (10) et un système hôte de communication (11) raccordé aux dits terminaux de communication au travers d'un réseau de communication,
lesdits terminaux de communication (10) incluant chacun :
une unité de codage/décodage d'image (102) destinée à coder ou décoder des données d'image ;
une première unité d'émission/réception (103) raccordée à ladite unité de codage/décodage d'image destinée à émettre ou recevoir lesdites données d'image codées; et
une première unité de commande (101) raccordée à la fois à ladite unité de codage/décodage d'image et à ladite première unité d'émission/réception destinée à commander à la fois ladite unité de codage/décodage d'image et ladite première unité d'émission/réception ;
ledit système hôte de communication (11) incluant :
une seconde unité d'émission/réception (112) raccordée à ladite première unité d'émission/réception au travers dudit réseau de communication destiné à émettre/recevoir sur demande d'au moins l'un des dits terminaux de communication lesdites données d'image codées ; et
une unité de stockage (113) raccordée à ladite seconde unité d'émission/réception destinée à stocker lesdites données d'image reçues dans ladite seconde unité d'émission/réception ;
caractérisé en ce que chacune des premières unités de commande (101) est opérationnelle afin d'ajouter des informations de commande d'image comprenant des informations de libération d'écran figé ou des informations d'indication d'image fixe aux dites données d'images codées de manière à modifier la transmission desdites données d'image entre un mode d'image animée et un mode d'image fixe ; en ce que ladite unité de stockage (113) est conçue pour de stocker lesdites données d'image avec les dites informations de commande d'image; et en ce que le système hôte de communication inclut une seconde unité de contrôle (111) raccordée à ladite seconde unité d'émission/réception afin de commander ladite seconde unité d'émission/réception pour modifier ladite transmission desdites données d'image entre ledit mode d'image animé ou ledit mode d'image fixe en lisant lesdites informations de commande d'image avec lesdites données d'image.

2. Système de stockage et de reproduction d'images selon la revendication 1, caractérisé en ce que ladite unité de codage/décodage d'image (102) est adaptée à coder lesdites donnés d'image en utilisant une technique de codage à prédiction d'image intermédiaire.

3. Système de stockage et de reproduction d'images selon la revendication 1 ou 2, caractérisé en ce que lesdits terminaux de communication (10) comprennent chacun en outre une unité de codage/décodage vocal (104) destinée à coder/décoder des données vocales, et chacune desdites premières unités d'émission/réception (103) et desdites secondes unités d'émission/réception (112) est adaptée à multiplexer, respectivement, lesdites données d'image codées et lesdites données vocales codées.

4. Système de stockage et de reproduction d'images selon l'une quelconque des revendications précédentes, caractérisé en ce que ladite première unité de commande (101) est conçue de manière à ajouter lesdites informations de commande d'image sous la forme d'informations d'en-tête desdites données d'image codées.

5. Système de stockage et de reproduction d'images selon la revendication 4, caractérisé en ce que lesdites informations d'en-tête sont sélectionnées à partir d'un groupe comprenant des informations d'indication d'image fixe, des informations de libération d'écran figé ou aucune indication.
